# EUROPEAN PATENT SPECIFICATION

(11) **EP 3 655 296 B1**
(45) Date of publication and mention of the grant of the patent: **15.03.2023**
(21) Application number: 17754080.4
(22) Date of filing: 20.07.2017
(51) Int. Cl.: B60T 8/00, B60T 17/04

(54) **SPACE-SAVING BRAKE CONTROL UNIT**
PLATZSPARENDE BREMSSTEUEREINHEIT
UNITÉ DE COMMANDE DE FREIN À ENCOMBREMENT RÉDUIT

(43) Date of publication of application: 27.05.2020
(73) Proprietor: KNORR-BREMSE Systeme für Schienenfahrzeuge GmbH, 80809 München (DE)
(72) Inventor: METAL, Attila, 1214 Budapest (HU); PRAKTER, Balint, 2030 Érd (HU)
(86) International application number: PCT/EP2017/068320
(87) International publication number: WO 2019/015757

(56) References cited:
- EP-A2- 0 989 040
- WO-A1-2015/106803

## Description

The present invention relates to a brake control unit comprising a plate-shaped carrier. The plate-shaped carrier has a first base side; a second base side opposite to the first base side; a first lateral side connecting between the first and second base sides; and a second lateral side opposite to the first lateral side connecting between the first and second base sides.

Such brake control unit is used in rail vehicles. Modern rail vehicle design offers high seating capacity by a tight arrangement of as many seats as possible, meanwhile keeping the cost of operation at a minimum level. Furthermore, in order to fulfil the increased standards of the travellers, disabled toilets and bicycle sections are integrated in the train unit's interior. Train vehicles are increasingly low floor vehicles.

Above conditions reduce the available room in the machinery space, therefore the technical equipment/devices, such as the brake control panel, should be integrated into smaller getting spaces. The brake unit controls all pneumatic process in the system of the train, (e.g. braking, wheel slide protection, sanding). It contains on the chassis pneumatic and electro-pneumatic control equipment on the carrier system.

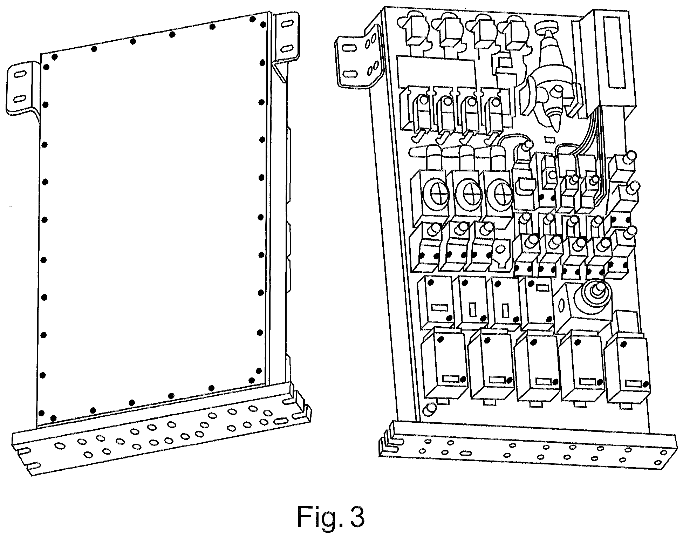

**Fig. 3** shows a conventional carrier frame having a block like structure, where all components are installed on the front side. The disadvantage of this solution is that the brake control panel's frontal area has a large lateral and horizontal extent, so the brake control panel requires large integration space, which again results in large, so called dead space behind the brake unit.

Document EP 0 989 040 A2 discloses a manifold to interposed between a pipe bracket and a service valve of a passenger rail car braking system also having a brake application relay valve, a primary control reservoir, a emergency control reservoir, and a main reservoir. The manifold includes electronically controlled emergency fill, normal fill, vent, and bypass valves and pneumatically controlled secondary emergency fill, secondary normal fill, secondary vent and manifold relay valves.

Document WO 2015/106803 A1 discloses a compressed-air frame of an electric locomotive with an electrical assembly which is inserted between sheet metal walls of the compressed air frame and has electrical modules accessible from the front.

It is the object of the present invention to provide a brake control unit which overcomes the above-mentioned problems, and it is particularly the object of the present invention to provide a brake control unit which is more compact without affecting the maintenance capabilities of the components in the brake control unit.

This object is achieved by the brake control unit having the features of claim 1. The present invention is further developed as defined in the dependent claims. The presented invention discloses a technical solution, which makes it possible to integrate the brake control into smaller spaces or even into spaces where an integration was not possible before, like under the frame of a low flow train vehicle.

According to the present invention, the brake control unit comprises a plate-shaped first carrier having a first base side; a second base side opposite to the first base side; a first lateral side connecting between the first and second base sides; a second lateral side opposite to the first lateral side connecting between the first and second base sides. The brake control unit further comprises a plate-shaped second carrier having a third base side and a fourth base side opposite to the third base side; wherein the second carrier is mounted to the first carrier such that the first base side B of the first carrier and the third base side of the second carrier span an angle of approximately 90°. Usually, the base sides of each plate-shaped carrier are larger than the lateral sides of the corresponding carrier.

By the above-mentioned configuration, the brake control unit is made more compact, while sufficient access to the components installed on the first and second carriers is maintained. In other words, compared with the block-shaped prior art brake control unit, the second carrier of the present invention provides an additional area for installing components without increasing the overall size of the brake control unit. The present invention makes it possible to integrate the brake control into smaller spaces, or even into spaces where an integration was not possible before, like under the frame of a low flow train vehicle. Eventually, smaller mounting space, optimal space usage and utilization of dead spaces is achieved by the present invention.

Preferably, the first and second carriers form a carrier assembly which is substantially L-shaped or T-shaped when viewed in a direction parallel to the first lateral side and the first base side. By this configuration, additional area for installing components can be provided and adjusted according to the requirements.

Preferably, the third base side of the second carrier protrudes from the second base side of the first carrier, and the third base side of the second carrier protrudes from the first base side of the first carrier; and a protruding length by which the third base side of the second carrier protrudes from the second base side of the first carrier is larger than a protruding length by which the third base side of the second carrier protrudes from the first base side of the first carrier. By adjusting the protruding lengths, the additional area for installing components can be optimized according to the requirements. More preferably, the second carrier is mounted at the third base side thereof to the first lateral side of the first carrier so that the position of the second carrier can easily be shifted.

An electrical connector is provided on the first base side of the first carrier; and/or a pneumatic connector is provided on the first base side of the first carrier; and/or a device to be operated is provided on the fourth base side of the second carrier; and/or a fixed device is provided on the second base side of the first carrier; and/or an air tank is provided on the second base side or the second lateral side of the first carrier.

By this configuration, the available space at the brake control unit is optimized. The present invention provides a non-cubic carrier body, where each different mounting side provides mounting space for devices having different functions and the devices are mounted on the carrier structure in a modular manner. In particular, the functional sub-groups are classified according to the following example: The easy accessible fourth base side of the second carrier is the only place, which provides full access during daily operation; therefore, sub-groups requiring frequent access such as the device to be operated are mounted on fourth base side of the second carrier. The first base side provides mounting space for interfaces such as the electric and pneumatic connectors which are used exclusively during the installing to be connected to the train vehicle. The second base side and the second lateral side each provide a mounting space for devices and air tanks which require no interaction during daily operation of the train vehicle. This geometry and functional arrangement ensures optimal operation environment and best usage of the available mounting space.
Fig. 1 shows a front-side view of an embodiment of the brake control unit according to the present invention;
Fig. 2 shows a rear-side view of the embodiment of the brake control unit according to the present invention; and
Fig. 3 shows a conventional brake control unit of the prior art.

In the following, an embodiment of the brake control unit 1 according to the present invention is described based on the attached figures.

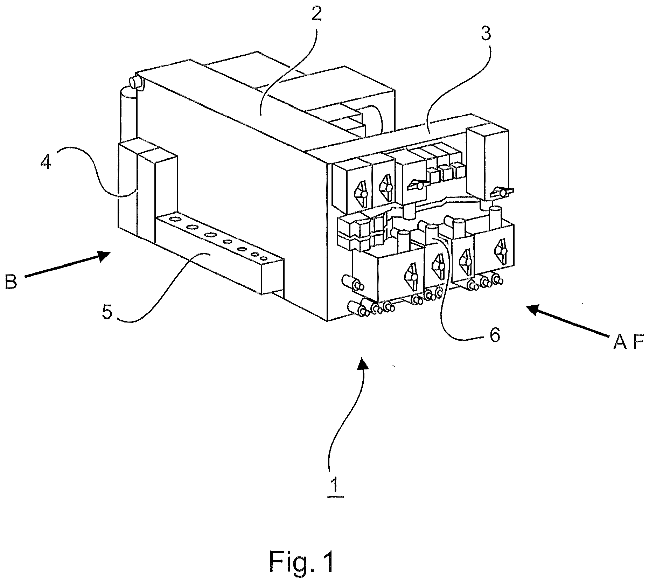

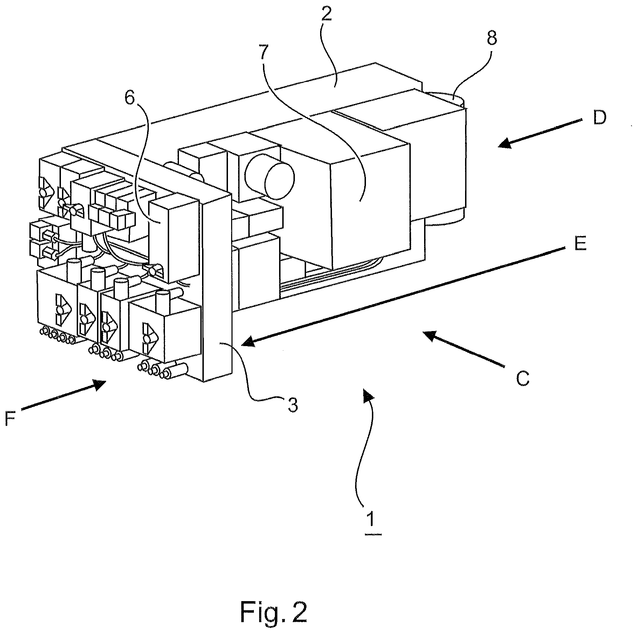

**Fig. 1** shows a front-side view of an embodiment of the brake control unit 1 according to the present invention; and **Fig. 2** shows a rear-side view of the embodiment of the brake control unit 1 according to the present invention.

The brake control unit 1 is used as an integrated brake control mounted in the train's coach or under the frame structure of the rail vehicle. The brake control unit 1 comprises a plate-shaped first carrier 2 having a first base side B; a second base side C opposite to the first base side B; a first lateral side A connecting between the first and second base sides B, C; a second lateral side D opposite to the first lateral side A and connecting between the first and second base sides B, C. The brake control unit 1 further comprises a plate-shaped second carrier 3 having a third base side E and a fourth base side F opposite to the third base side E; wherein the second carrier 3 is mounted to the first carrier 2 such that the first base side B of the first carrier 2 and the third base side E of the second carrier 3 span an angle of approximately 90°. Usually, the base sides of each plate-shaped carrier are larger than the lateral sides of the corresponding carrier. In the context of the present invention, the term "side" is not limited to a planar surface. Rather, the term "side" also encompasses non-planar surfaces which define the rough plate-shaped contour of the first and second plate-shaped carriers 2, 3. The first and second carriers 2, 3 can be made of metal, for example by a solid aluminium block. The first and second carriers 2, 3 can also be made of metal sheets made of steel or aluminium.

By the above-mentioned configuration, the brake control unit 1 is made more compact, while sufficient access to the components installed on the first and second carriers 2, 3 is maintained. In other words, compared with the block-shaped prior art brake control unit, the second carrier 3 of the present invention provides an additional area for installing components without increasing the overall size of the brake control unit 1. On the one hand, the second carrier 3 of the present invention does not much increase the longitudinal length of the brake control unit 1, which is mainly defined by the longitudinal length of the first carrier 2. On the other hand, the second carrier 3 of the present invention offers enough additional space for installing components.

The first and second carriers 2, 3 form a carrier assembly that is substantially L-shaped when viewed in a direction parallel to the first lateral side A and the first base side B. By this configuration, the additional area for installing components can be provided according to the requirements.

Alternatively, the first and second carriers 2, 3 may form a carrier assembly which is substantially T-shaped. In this case, the third base side E of the second carrier 3 protrudes from the second base side C of the first carrier 2, and the third base side E of the second carrier 3 protrudes from the first base side B of the first carrier 2.

By adjusting the above-mentioned protruding lengths, the additional area for installing components can be optimized according to the requirements. The brake control unit 1 of the present is not limited to the substantially L-shaped or T-shaped configurations. For example, a protruding length by which the third base side E of the second carrier 3 protrudes from the second base side C of the first carrier 2 can be larger than a protruding length by which the third base side E of the second carriers protrudes from the first base side B of the first carrier 2. If the first and second carriers 2, 3 form a carrier assembly that is substantially L-shaped, one of the above-mentioned protruding lengths is substantially zero.

The second carrier 3 is mounted at the third base side E thereof to the first lateral side A of the first carrier 2. If the need arises, it is easy to shift the position where the second carrier 3 is mounted to the first carrier 2.

In the present embodiment, electrical connectors 4 are provided on the first base side B of the first carrier 2; and/or pneumatic connectors 5 are provided on the first base side B of the first carrier 2; and/or a device 6 to be operated is provided on the fourth base side F of the second carrier; and/or a fixed device 7 is provided on the second base side C of the first carrier 2; and/or an air tank 8 is provided on the second base side C or the second lateral side D of the first carrier 2. The device 6 to be operated can be any device to which the user needs permanent access during operation. For example, the device 6 to be operated can be a brake lever, a brake knob or any other brake or control handle.

By this configuration, the functional sub-groups are classified according to the following example: The easy accessible fourth base side F of the second carrier 3 is the only place which provides full access during daily operation, therefore sub-groups requiring frequent access such as the device 6 to be operated are mounted on fourth base side F of the second carrier 3. The first base side B provides mounting space for interfaces such as the electrical connector 4 and the pneumatic connector 5 which are exclusively used during installing and connecting the same to the train vehicle. The second base side C and the second lateral side D each provide a mounting space for devices, which require no interaction during daily operation of the train vehicle, such as the fixed device 7 and the air tank 8. This geometry and functional arrangement ensures optimal operation environment and best usage of the available mounting space.

The functional sub-groups are thereby classified to fulfil the following requirements:
- access to relevant components (switches, taps, shut-off valves) is ensured to the train driver during operation of the train;
- the service/maintenance frequency of the specific device is ensured;
- access to relevant interfaces during installation/commissioning is ensured; and
- access to relevant interfaces during train operation is ensured.

As a result, the available space at the brake control unit 1 is optimized. The present invention provides a non-cubic carrier body, where each different mounting side provides mounting space for devices having different function, so the devices are mounted on the carrier structure in a modular manner.

### REFERENCE SIGNS

- 1: Bral<e control unit
- 2: first carrier
- 3: second carrier
- 4: electrical connector
- 5: pneumatic connector
- 6: device to be operated
- 7: fixed device
- 8: air tank
- A: first lateral side of the first carrier
- B: first base side of the first carrier
- C: second base side of the first carrier
- D: second lateral side of the first carrier
- E: third base side of the second carrier
- F: fourth base side of the second carrier

## Claims

1. Brake control unit (1) comprising:
a plate-shaped first carrier (2) having:
a first base side (B);
a second base side (C) opposite to the first base side (B);
a first lateral side (A) connecting between the first and second base sides (B, C);
a second lateral side (D) opposite to the first lateral side (A) and connecting between the
first and second base sides (B, C),
**characterized by**
a plate-shaped second carrier (3) having:
a third base side (E);
a fourth base side (F) opposite to the third base side (E); wherein
the second carrier (3) is mounted to the first carrier (2) such that the first base side (B) of the first carrier (2) and the third base side (E) of the second carrier (3) span an angle of approximately 90°,
wherein the brake control unit (1) further comprises:
an electrical connector (4) provided on the first base side (B) of the first carrier (2),
a pneumatic connector (5) provided on the first base side (B) of the first carrier (2),
a device (6) to be operated provided on the fourth base side (F) of the second carrier (3),
a fixed device (7) provided on the second base side (C) of the first carrier (2),
and an air tank (8) provided on the second base side (C) or the second lateral side (D) of the first carrier (2).

2. Brake control unit (1) according to claim 1, wherein
the first and second carriers (2, 3) form a carrier assembly which is substantially L-shaped or T-shaped when viewed in a direction parallel to the first lateral side (A) and the first base side (B).

3. Brake control unit (1) according to any one of the preceding claims, wherein
the third base side (E) of the second carrier (3) protrudes from the second base side (C) of the first carrier (2), and the third base side (E) of the second carrier (3) protrudes from the first base side (B) of the first carrier (2); and
a protruding length by which the third base side (E) of the second carrier (3) protrudes from the second base side (C) of the first carrier (2) is larger than a protruding length by which the third base side (E) of the second carrier (3) protrudes from the first base side (B) of the first carrier (2).

4. Brake control unit (1) according to any one of the preceding claims, wherein
the second carrier (3) is mounted at the third base side (E) thereof to the first lateral side (A) of the first carrier (2).

## Patentansprüche

1. Bremssteuereinheit (1), Folgendes umfassend:
einen plattenförmigen ersten Träger (2), Folgendes aufweisend:
eine erste Basisseite (B);
eine zweite Basisseite (C), die der ersten Basisseite (B) entgegengesetzt ist;
eine erste laterale Seite (A), die zwischen der ersten und zweiten Basisseite (B, C) eine Verbindung herstellt;
eine zweite laterale Seite (D), die der ersten lateralen Seite (A) entgegengesetzt ist und zwischen der ersten und zweiten Basisseite (B, C) eine Verbindung herstellt,
**gekennzeichnet durch**
einen plattenförmigen zweiten Träger (3), Folgendes aufweisend:
eine dritte Basisseite (E);
eine vierte Basisseite (F), die der dritten Basisseite (E) entgegengesetzt ist; wobei der zweite Träger (3) derart am ersten Träger (2) montiert ist, dass die erste Basisseite (B) des ersten Trägers (2) und die dritte Basisseite (E) des zweiten Trägers (3) einen Winkel von etwa 90° überspannen, wobei die Bremssteuereinheit (1) ferner Folgendes umfasst:
einen elektrischen Verbinder (4), der an der ersten Basisseite (B) des ersten Trägers (2) vorgesehen ist, einen pneumatischen Verbinder (5), der an der ersten Basisseite (B) des ersten Trägers (2) vorgesehen ist,
eine zu betätigende Vorrichtung (6), die an der vierten Basisseite (F) des zweiten Trägers (3) vorgesehen ist,
eine feste Vorrichtung (7), die an der zweiten Basisseite (C) des ersten Trägers (2) vorgesehen ist,
und einen Luftbehälter (8), der an der zweiten Basisseite (C) oder der zweiten lateralen Seite (D) des ersten Trägers (2) vorgesehen ist.

2. Bremssteuereinheit (1) nach Anspruch 1, wobei
der erste und zweite Träger (2, 3) eine Trägeranordnung ausbilden, die, wenn sie in eine Richtung parallel zur ersten lateralen Seite (A) und zur ersten Basisseite (B) betrachtet wird, im Wesentlichen L-förmig oder T-förmig ist.

3. Bremssteuereinheit (1) nach einem der vorstehenden Ansprüche, wobei
die dritte Basisseite (E) des zweiten Trägers (3) von der zweiten Basisseite (C) des ersten Trägers (2) vorsteht und die dritte Basisseite (E) des zweiten Trägers (3) von der ersten Basisseite (B) des ersten Trägers (2) vorsteht und
die vorstehende Länge, um die die dritte Basisseite (E) des zweiten Trägers (3) von der zweiten Basisseite (C) des ersten Trägers (2) vorsteht, größer ist als die vorstehende Länge, um die dritte Basisseite (E) des zweiten Trägers (3) von der ersten Basisseite (B) des ersten Trägers (2) vorsteht.

4. Bremssteuereinheit (1) nach einem der vorstehenden Ansprüche, wobei
der zweite Träger (3) an dessen dritter Basisseite (E) an der ersten lateralen Seite (A) des ersten Trägers (2) montiert ist.

## Revendications

1. Unité (1) de commande de frein comprenant :
un premier support (2) en forme de plaque ayant :
un premier côté (B) de base ;
un deuxième côté (C) de base opposé au premier côté (B) de base ;
un premier côté (A) latéral de liaison entre le premier et le deuxième côtés (B, C) de base ;
un deuxième côté (D) latéral opposé au premier côté (A) latéral et de liaison entre le premier et le deuxième côtés (B, C) de base ;
**caractérisée par**
un deuxième support (3) en forme de plaque ayant :
un troisième côté (E) de base ;
un quatrième côté (F) de base opposé au troisième côté (E) de base ; dans lequel
le deuxième support (3) est monté sur le premier support (2), de manière à ce que le première côté (B) de base du premier support (2) et le troisième côté (E) de base du deuxième support (3) fassent un angle d'environ 90°;
dans lequel l'unité (1) de commande de frein comprend en outre :
un connecteur (4) électrique prévu sur le premier côté (B) de base du premier support (2),
un connecteur (5) pneumatique prévu sur le premier côté (B) de base du premier support (2),
un dispositif (6) à faire fonctionner prévu sur le quatrième côté (F) de base du deuxième support (3),
un dispositif (7) fixe prévu sur le deuxième côté (C) de base du premier support (2),
et un réservoir (8) à air prévu sur le deuxième côté (C) de base ou sur le deuxième côté (D) latéral du premier support (2).

2. Unité (1) de commande de frein suivant la revendication 1, dans laquelle
le premier et le deuxième supports (2, 3) forment un ensemble de supports, qui est sensiblement en forme de L ou en forme de T, tel que vu dans une direction parallèle au premier côté (A) latéral et au premier côté (B) de base.

3. Unité (1) de commande de frein suivant l'une quelconque des revendications précédentes, dans laquelle
le troisième côté (E) de base du deuxième support (3) fait saillie du deuxième côté (C) de base du premier support (2), et le troisième côté (E) de base du deuxième support (3) fait saillie du premier côté (B) de base du premier support (2) ; et
une longueur de saillie, dont le troisième côté (E) de base du deuxième support (3) fait saillie du deuxième côté (C) de base du premier support (2), est plus grande qu'une longueur de saillie, dont le troisième côté (E) de base du deuxième support (3) fait saillie du premier côté (B) de base du premier support (2) .

4. Unité (1) de commande de frein suivant l'une quelconque des revendications précédentes, dans laquelle
le deuxième support (3) est monté par son troisième côté (E) de base sur le premier côté (A) latéral du premier support (2) .
